Europäisches Patentamt

European Patent Office

Office européen des brevets

(11) Numéro de publication : **0 419 334 B1**

(12) **FASCICULE DE BREVET EUROPEEN**

(45) Date de publication du fascicule du brevet :
05.01.94 Bulletin 94/01

(51) Int. Cl.⁵ : **C01B 33/34, B01J 29/28**

(21) Numéro de dépôt : **90402551.7**

(22) Date de dépôt : **14.09.90**

(54) **Zéolite de type bêta et son procédé de préparation.**

(30) Priorité : **22.09.89 FR 8912556**

(43) Date de publication de la demande :
**27.03.91 Bulletin 91/13**

(45) Mention de la délivrance du brevet :
**05.01.94 Bulletin 94/01**

(84) Etats contractants désignés :
**AT BE CH DE DK ES GB IT LI NL SE**

(56) Documents cités :
**EP-A- 0 055 046**
**EP-A- 0 159 847**
**US-A- 3 308 069**
**US-A- 4 061 717**

(73) Titulaire : **INSTITUT FRANCAIS DU PETROLE**
**4, Avenue de Bois Préau**
**F-92502 Rueil-Malmaison (FR)**

(72) Inventeur : **Caullet, Philippe**
**4, rue Kellermann**
**F-68110 Illzach (FR)**
Inventeur : **Guth, Jean-Louis**
**59, rue Bellevue Brunstatt**
**F-68200 Mulhouse (FR)**
Inventeur : **Faust, Anne-Catherine**
**23, rue de Bourgogne**
**F-68200 Mulhouse (FR)**
Inventeur : **Raatz, Francis**
**10, Allée Jacques Prévert**
**F-78260 Acheres (FR)**
Inventeur : **Joly, Jean-François**
**20, rue Béranger**
**F-75003 Paris (FR)**
Inventeur : **Deves, Jean-Marie**
**75, rue de Bons Raisins**
**F-92500 Rueil Malmaison (FR)**

## Description

L'invention concerne une nouvelle zéolithe de type bêta et un procédé de préparation de cette zéolithe.

En raison de leurs propriétés de sélectivité géométrique et d'échange ionique, les zéolithes sont utilisées industriellement sur une large échelle, aussi bien en adsorption (par exemple séchage de gaz, séparation de paraffines linéaires et branchées, séparation de composés aromatiques etc.) qu'en catalyse (par exemmple craquage catalytique, hydrocraquage, isomérisation, oligomérisation etc.).

La composition chimique des zéolithes contenant dans leur charpente les éléments Si et Al peut être représentée par la formule approchée suivante :

$$M_{2/n}O, Al_2O_3, xSiO_2$$

où M représente un cation de valence n, tel que par exemple un alcalin, un alcalino-terreux ou un cation organique,

x varie, en fonction des structures, entre 2 et l'infini, auquel cas la zéolithe est une silice microporeuse.

Bien que de nombreuses zéolithes du type aluminosilicate existent dans la nature, la recherche de produits ayant des propriétés nouvelles a conduit au cours des dernières années à la synthèse d'une grande variété de ces aluminosilicates à structure zéolithique. Une nouvelle zéolithe, sans équivalent naturel connu et découverte à la fin des années soixante-dix, est la zéolithe bêta (US-A- 3308069, EP-A-64328, US-A-4061717). Cette zéolithe est également connue sous le nom de NU-2 (EP-A-55046). Les zéolithes de type bêta sont toujours synthétisées en présence de cations sodium et d'un nombre très limité de structurants organiques. Pratiquement, pour obtenir de la zéolithe bêta, il est nécessaire de partir d'un mélange réactionnel contenant des cations $Na^+$ et $TEA^+$ (tétraéthylammonium).

Toutes les zéolithes de type bêta préparées jusqu'à présent ont été synthétisées en milieu classique, c'est-à-dire dans un milieu alcalin à un pH généralement supérieur à 9, milieu dans lequel l'agent mobilisateur de la silice est l'anion $OH^-$. Un autre milieu de synthèse des zéolithes a été récemment découvert : il s'agit du milieu fluorure, dans lequel l'agent mobilisateur de la silice est l'anion $F^-$; dans ce milieu, le pH est généralement inférieur à 10 (voir par exemple J.L. GUTH, H. KESSLER et R. WEY, Proc. 7th Int. Zeolite. Conf, Tokyo, août 17-22, 1986, p. 121). La synthèse d'un nombre limité de structures zéolithiques a déjà été réussie dans ce nouveau milieu, comme par exemple la MFI (demande de brevet français n° 88/09631) et la ferriérite (demande de brevet français n° 86/16362).

Par rapport au milieu de synthèse alcalin ($OH^-$), le milieu fluorure présente un certain nombre d'avantages très appréciables. En effet, en milieu alcalin, la plupart des zéolithes synthétisées sont métastables : on risque donc au cours de la synthèse de voir apparaître des phases solides plus stables et de précipiter des phases non désirées. Cette difficulté ne fait que s'accroître lorsque les quantités à préparer augmentent, c'est-à-dire lorsque l'on passe du stade du laboratoire au stade industriel. Par ailleurs, ces zéolithes métastables dans le milieu réactionnel basique ne sont obtenues que grâce à une forte sursaturation en espèces actives dans le milieu. Ceci provoque une nucléation rapide et, par conséquent, conduit à des cristaux de petites tailles, les dimensions moyennes de ces cristaux se situant dans le domaine du micromètre. L'élaboration de cristaux de plus grande taille est donc difficile en milieu basique. Or, dans certaines applications, il peut être intéressant de disposer de cristaux de grande taille de manière à préserver par exemple la stabilité thermique du solide.

De nombreuses applications, en particulier en catalyse acide, nécessitent des zéolithes sous une forme protonée et complètement débarrassées de leurs cations de compensation alcalins ou alcalino-terreux introduits lors de la synthèse. On peut aboutir à la forme protonée en procédant à des échanges ioniques longs et répétés avec des cations $NH_4+$ par exemple, échanges suivis de calcination pour décomposer ces cations en protons. Cette étape d'échange d'ions pourrait être évitée si on pouvait remplacer entièrement les cations alcalins ou alcalino-terreux par des cations décomposables lors de la synthèse, c'est-à-dire des cations $NH_4^+$ et/ou organiques. Introduire des cations $NH_4^+$ dans le solide lors de synthèse en milieu basique est impossible car le pH est trop élevé et alors $NH_4^+$ serait transformé en $NH_3$. De plus les synthèses effectuées à des pH où le cation $NH_4^+$ est stable sont difficiles et longues à cause de la faible solubilité des sources de silice à ces bas pH.

Un avantage supplémentaire des synthèses réalisées en milieu fluorure par rapport à celles réalisées en milieu classique $OH^-$ est de conduire à des solides dont les propriétés acides et d'échange ionique sont de natures différentes. Les catalyseurs acides préparés à partir de solides obtenus en milieu fluorure présentent des propriétés catalytiques améliorées. Il est à ce niveau très important de remarquer que la structure cristallographique d'un solide ne suffit pas pour définir entièrement ses propriétés, et plus particulièrement ses propriétés acides qui jouent un rôle primordial en catalyse.

Contrairement à leurs homologues préparés selon l'art antérieur, les zéolithes de type bêta préparées selon l'invention contiennent du fluor après l'étape de synthèse et également l'étape d'élimination des composés organiques introduits au cours de la synthèse. Le fluor, comme nous le verrons plus loin, confère aux zéolithes bêta suivant l'invention des propriétés acides et d'échange ionique particulières.

Un autre avantage important du milieu de synthèse fluorure est de permettre l'obtention de zéolithe bêta non seulement exempte de cations sodium, mais également du cation TEA$^+$. Ce cation est habituellement introduit dans le milieu de synthèse alcalin par le biais de la base TEAOH, qui est un réactif excessivement onéreux. La possibilité, en changeant de milieu, de préparer de la zéolithe bêta en évitant ce structurant organique très coûteux est un point positif.

L'invention a donc pour objet une nouvelle zéolithe cristalline synthétique de type bêta, ainsi qu'un procédé de synthèse de ladite zéolithe dans lequel les inconvénients cités précédemment sont évités, et qui confère de plus aux zéolithes selon l'invention des propriétés, particulièrement des propriétés acides, améliorées. Le nouveau type de zéolithe suivant l'invention peut être utilisé en adsorption et en catalyse. La zéolithe de type bêta suivant l'invention a (après synthèse) la formule générale approchée suivante :

$$M_{2/n}O, Al_2O_3, xSiO_2$$

où M représente un proton et/ou un cation métallique (n étant la valence de M).

On verra ci-dessous que dans une méthode de préparation selon l'invention, ledit proton ou cation métallique résulte de la décomposition thermique d'au moins un cation comme par exemple $NH_4+$ ou/et d'au moins un agent organique comme la méthylamine ($CH_3NH_2$).ou le diazabicyclo-1,4 (2,2,2) octane (appelé par la suite "DABCO") présents dans le milieu réactionnel ou/et d'au moins un cation de métal non décomposable issu ou non du milieu réactionnel comme par exemple un cation alcalin et/ou alcalino-terreux ou un autre cation métallique précisé ci-après.

La zéolithe selon l'invention est notamment caractérisée par :

i) un nombre x compris entre 5 et 800, de préférence entre 7 et 350 (x étant le rapport molaire $SiO_2/Al_2O_3$),

ii) un diagramme de diffraction des rayons X représenté dans le tableau I de la description,

iii) une teneur en fluor comprise entre environ 0,005 et 2,0 % en poids, de préférence entre environ 0,01 et 1,5 % en poids.

Elle est également caractérisée par le fait qu'elle a été synthétisée en milieu fluorure.

Cette zéolithe de type bêta selon l'invention présente généralement au moins une dimension des cristaux comprise entre 0,10 et 10 µm et, de préférence, entre 0,5 et 10 µm (1µm = $10^{-6}$ mètre).

L'invention concerne aussi un procédé de préparation de ladite zéolithe de type bêta, qui consiste en ce que :

a) on forme un mélange réactionnel en solution ayant un pH inférieur à environ 9 et comprenant de l'eau, au moins une source de silice, au moins une source d'aluminium, au moins une source d'agent mobilisateur contenant des ions fluorures (F$^-$), au moins une source d'au moins un agent structurant choisi dans le groupe formé par le diazabicyclo-1,4 (2,2,2) octane et un mélange de diazabicyclo-1,4 (2,2,2) octane et de méthylamine, cet agent structurant pouvant éventuellement fournir des cations organiques, éventuellement une source de cations alcalins et/ou alcalino-terreux, ledit mélange réactionnel ayant une composition, en termes de rapport molaire, comprise dans les intervalles de valeurs suivants :

Si/Al : 3-200, de préférence 3-100,
F$^-$/Si : 0,1-8, de préférence 0,2-6,
H$_2$O/Si : 4-30, de préférence 5-20,
(R+R')/Si : 0,5-4,
R/R' : 0,1-infini, de préférence 0,2-infini, où R est le DABCO et R' la méthylamine (R' = 0 dans le cas où on n'utilise pas de méthylamine),

b) on maintient ledit mélange réactionnel à une température de chauffage comprise entre environ 50 et 250°C, de préférence entre environ 80 et environ 220°C, jusqu'à ce que l'on obtienne un composé cristallin, et

c) on calcine ledit composé à une température supérieure à environ 350°C et, de préférence, supérieure à environ 450°C.

La présence, après l'étape de calcination (étape c)) destinée à éliminer les composés organiques, de fluor dans les zéolithes de type bêta selon l'invention, à des teneurs comprises de préférence entre 0,01 et 1,5 % en poids, entraîne des modifications des propriétés acides et d'échange ionique des solides. Ceux-ci se distinguent des zéolithes bêta obtenues en milieu classique. En effet, en fonction des conditions de synthèse, les solides selon l'invention sont caractérisés par un spectre de vibration infra-rouge dans la région des OH (3800 à 3500 cm$^{-1}$) qui présente des bandes attribuées aux groupes Si-OH (zone 3730-3750 cm$^{-1}$) et aux groupes Al-OH (zone 3580-3640 cm$^{-1}$) moins intenses que celles des zéolithes bêta de l'art antérieur de même rapport Si/Al. Corrélativement, la capacité d'échange ionique des zéolithes selon l'invention à l'état fluoré est généralement inférieure à celle des produits de l'art antérieur.

Les zéolithes bêta suivant l'invention, dont la teneur en hydroxyles et la capacité d'échange sont réduites, possèdent de manière surprenante des propriétés acides remarquables comme en témoignent la thermodésorption d'ammoniac et la spectroscopie infra-rouge de bases faibles adsorbées telles que, par exemple, l'éthylène ou $H_2S$. Il est donc clair que l'acidité des solides selon l'invention est de nature particulière. Sans nous lier à une théorie particulière, on peut proposer que dans les solides selon l'invention une partie plus ou moins importante des sites acides de charpente du type Al-OH-Si sont remplacés par des sites du type Al-F-Si.

La nature exacte des sites acides contenus dans les zéolithes bêta suivant l'invention reste à préciser ; cependant, il semble que l'existence de ces sites particuliers est liée à la présence de fluor dans les solides ou au moins résulte du fait que la synthèse est réalisée en milieu fluorure.

Par des traitements particuliers, il serait possible d'éliminer tout ou partie du fluor contenu dans les solides suivant l'invention sans altérer leur cristallinité. Une technique que l'on peut utiliser pour défluorer lesdits solides consiste à procéder à un traitement dans une solution de $NH_4OH$ à des températures comprises par exemple entre la température ambiante (15 à 25°C) et 150°C (traitement sous pression).

On peut avantageusement chauffer le mélange réactionnel dans un autoclave revêtu intérieurement de polytétrafluoroéthylène (PTFE) entre environ 50 et environ 250 °C et de préférence entre environ 80 et environ 220°C, pendant une durée qui peut varier de quelques heures à quelques jours (habituellement 8 à 1200 heures) selon la température de réaction retenue, jusqu'à l'obtention d'un solide cristallisé que l'on sépare des eaux-mères par filtration et qui est ensuite lavé à l'eau distillée.

De manière avantageuse, on peut préparer ledit mélange réactionnel à un pH compris entre environ 4 et environ 9 et, de manière préférée, entre environ 6 et environ 9.

Selon un mode préféré de préparation des zéolithes bêta suivant l'invention, les rapports molaires des constituants du mélange réactionnel sont compris dans les intervalles des valeurs suivants :

Si/Al          : 4-20
$F^-$/Si          : 0,5-4
$H_2O$/Si          : 5-12
(R+R')/Si          : 0,9-2,1
R/R'          : 0,3-infini

où R est le DABCO (ou diazabicyclo-1,4 (2,2,2) octane) et R' la méthylamine ($CH_3NH_2$).

On peut éventuellement ajouter audit mélange réactionnel au moins un sel complémentaire dans un rapport molaire sel complémentaire/$SiO_2$ compris généralement entre 0,1 et 4 et, de préférence, entre 0,2 et 0,5 et/ou au moins un germe de la zéolithe formée selon l'invention dans un rapport pondéral cristal de zéolithe/$SiO_2$ compris généralement entre 0,01 et 0,1 et, de manière préférée, entre 0,02 et 0,03, de telle sorte que la morphologie, la taille des cristaux ainsi que la cinétique de la réaction de cristallisation peuvent être avantageusement contrôlées.

On peut travailler avantageusement en milieu agité, ce qui peut permettre de diminuer considérablement le temps de réaction.

Le pH du milieu réactionnel, inférieur à environ 9, peut être obtenu soit directement à partir de l'un ou plusieurs des réactifs mis en oeuvre, soit par l'ajout d'un acide, d'une base, d'un sel acide, d'un sel basique ou d'un mélange tampon complémentaire.

De nombreuses sources de silice peuvent être utilisées. On peut citer notamment les silices sous forme d'hydrogels, d'aérogels, de suspensions colloïdales, ainsi que les silices résultant de la précipitation de solutions de silicates solubles ou de l'hydrolyse d'esters siliciques comme l'ester tétraéthylique de l'acide orthosilicique $Si(OC_2H_5)_4$ ou de complexes comme le fluorosilicate de sodium $Na_2SiF_6$ ou d'ammonium $(NH_4)_2SiF_6$.

Parmi les sources d'aluminium utilisées, on choisira de préférence le chlorure d'aluminium hydraté ($AlCl_3$, $6H_2O$), le nitrate d'aluminium nonahydraté ($Al(NO_3)_3$, $9H_2O$), le sulfate d'aluminium à 16 molécules d'eau ou le fluorure d'aluminium trihydraté $AlF_3$, $3H_2O$. On peut également citer la pseudo-boehmite.

Par ailleurs, au lieu de partir de sources séparées de silice et d'aluminium, on peut également prendre des sources où les deux éléments sont combinés comme par exemple un gel aluminosilicaté fraîchement précipité.

Les anions fluorures $F^-$ peuvent être introduits sous forme de sels desdits agents structurants ou d'ammonium ou de métaux alcalins comme par exemple NaF, $NH_4F$, $NH_4HF_2$ ou sous forme d'acide comme HF ou encore sous forme de composés hydrolysables pouvant libérer des anions fluorures dans l'eau comme le fluorure de silicium $SiF_4$ ou le fluorosilicate d'ammonium $(NH_4)_2SiF_6$ ou de sodium $Na_2SiF_6$.

Les acides ou sels acides, les bases ou sels basiques ajoutés éventuellement en complément pour amener le pH du milieu réactionnel à la valeur désirée peuvent être choisis parmi les acides courants comme, par exemple, HF, HCl, $HNO_3$, $H_2SO_4$, $CH_3COOH$ ou les sels acides comme, par exemple, $NH_4HF_2$, $KHF_2$, $NaHSO_4$, les bases courantes comme, par exemple, $NaHCO_3$, $CH_3COONa$, $Na_2S$, NaHS ou les mélanges tampons comme, par exemple, ($CH_3COOH$, $CH_3COONa$) ou ($NH_4OH$, $NH_4Cl$).

La calcination (étape c)) se déroule avantageusement à une température comprise entre environ 520 et 800°C sous atmosphère de gaz sec, comme par exemple de l'air ou un gaz inerte, de manière à décomposer l'agent structurant présent dans les pores de la zéolithe.

Après l'étape d'élimination des composés organiques (étape c)) et éventuellement de défluoration partielle ou totale, on peut introduire dans la zéolithe de structure bêta selon l'invention, par des techniques d'échanges ioniques bien connues dans l'art antérieur, au moins un élément de la classification périodique, dont les cations peuvent être préparés en milieu aqueux et choisis dans la famille constituée par les groupes IIA, IIIA, IB, IIIB, IIB, IVB et VIIIA de la classification périodique des éléments. On citera à titre d'exemple les cations alcalins alcalino-terreux, les cations de terres rares, $Fe^{II}$, $Fe^{III}$, $Co^{II}$, $Co^{III}$, $Ni^{II}$, $Cu^{II}$, $Zn^{II}$, $Ag^{I}$, $Pt^{II}$.

L'identification des zéolithes de type bêta suivant l'invention peut se faire de manière aisée à partir de leur diagramme de diffraction des rayons X. Ce diagramme de diffraction peut être obtenu à l'aide d'un diffractomètre en utilisant la méthode classique des poudres avec le rayonnement $K\alpha$ du cuivre. Un étalon interne permet de déterminer précisémment les valeurs des angles $2\theta$ associées aux pics de diffraction. Les différentes distances interréticulaires $d_{hkl}$, caractéristiques de l'échantillon, sont calculées à partir de la relation de Bragg. L'estimation de l'erreur de mesure $\Delta(d_{hkl})$ sur $d_{hkl}$ se calcule en fonction de l'erreur absolue $\Delta(2\theta)$ affectée à la mesure de $2\theta$ par la relation de Bragg. En présence d'un étalon interne, cette erreur est minimisée et prise couramment égale à $\pm 0.05°$. L'intensité relative I/Io affectée à chaque valeur de $d_{hkl}$ est estimée à partir de la hauteur du pic de diffraction correspondant. Cette dernière peut également être déterminée à partir d'un cliché obtenu à l'aide d'une chambre de Debye-Scherrer. On utilise souvent une échelle de symboles pour caractériser cette intensité : FF = très forte, F = forte, mF = moyenne à forte, m = moyenne, mf = moyenne à faible, f = faible, ff = très faible.

Le tableau I représente le diagramme de diffraction des rayons X caractéristique des zéolithes de type bêta selon l'invention. Dans la colonne des $d_{hkl}$ on a représenté les valeurs extrêmes que peuvent prendre les différentes distances interréticulaires $d_{hkl}$. Chacune de ces valeurs doit être affectée de l'erreur de mesure généralement comprise entre $\pm 0,07$ et $\pm 0,002$ suivant la valeur de $2\theta$ ($d_{hkl}$ est exprimée en Angströms, 1 Å = $10^{-10}$ m).

La zéolithe de structure bêta selon l'invention peut être utilisée seule ou en mélange avec une matrice au sein d'un catalyseur.

Ladite zéolithe peut par exemple, après synthèse, être mise en forme en utilisant une matrice qui peut être inerte ou active pour la réaction à promouvoir. Les matrices que l'on emploie sont généralement choisies dans le groupe formé par les argiles, les alumines, la silice, la magnésie, la zircone, l'oxyde de titane, l'oxyde de bore et toute combinaison d'au moins deux des composés précités comme la silice-alumine, la silice-magnésie etc... Toutes les méthodes connues d'agglomération et de mise en forme sont applicables, telles que par exemple, l'extrusion, le pastillage, la coagulation en goutte etc...

Le catalyseur possède alors une teneur pondérale en zéolithe de type bêta selon l'invention généralement comprise entre 20 et 99,5 %, de préférence entre 40 et 95 % et une teneur pondérale en matrice généralement comprise entre 0,5 et 80 %, de préférence entre 5 et 60 %.

Le catalyseur contenant la zéolithe de structure bêta selon l'invention peut renfermer en outre une fonction hydrogénante ou déshydrogénante constituée en général par au moins un métal ou/et composé de métal choisi parmi les groupes IA, VIB (Cr, Mo, W) et VIII de la classification périodique des éléments, par exemple le platine, le palladium ou/et le nickel.

## TABLEAU I

| $2\theta$ (°) | $d_{hkl}$ (Å) | I/Io |
|:---:|:---:|:---:|
| 7,60 | 11,60 | F |
| 17,30 | 5,12 | ff |
| 18,90 | 4,69 | ff |
| 21,10 | 4,21 | mF |
| 22,25 | 3,99 | FF |
| 25,15 | 3,53 | mf |
| 27,1 | 3,29 | mf |
| 28,5 | 3,129 | mf |
| 29,45 | 3,030 | mf |
| 33,05 | 2,707 | f |
| 34,55 | 2,594 | ff |
| 35,7 | 2,513 | ff |

Les exemples suivants illustrent l'invention sans en limiter la portée.

EXEMPLE 1

1,4 g de diazabicyclo-1,4 (2,2,2) octane (DABCO) soit $1,25 \cdot 10^{-2}$ mole et 0,97 g de solution aqueuse à 40 % de méthylamine soit $1,25 \cdot 10^{-2}$ mole de $CH_3NH_2$ sont ajoutés à 0,92 g d'eau distillée. A ce mélange sont additionnés successivement et sous agitation 1,25 g de solution aqueuse de HF à 40 % soit 0,025 mole de HF puis 0,90 g de tixolex 28 sous forme $NH_4^+$ (0,0125 mole de silicium et $1,79 \cdot 10^{-3}$ mole d'aluminium soit un rapport Si/Al = 7) et environ 15 mg de cristaux de mordénite forme $H^+$ soigneusement broyés.

La composition molaire du mélange réactionnel est la suivante :
Si/Al = 7 ; $F^-$/Si = 2 ; $NH_4^+$/Si = 0,14 ; (R+R')/Si = 2 ; R/R' = 1 et $H_2O$/Si = 10 (R et R' désignent respectivement le DABCO et la méthylamine).

Après 10 minutes d'agitation, le mélange est transvasé dans un autoclave de 75 ml revêtu intérieurement de téflon. On maintient ledit mélange à 170°C pendant 15 jours en milieu non agité. Le solide est séparé des eaux-mères par filtration et est lavé alternativement à l'eau distillée et à l'acétone, puis est séché 24 heures à 80°C. Le diagramme de diffraction des rayons X du produit final est caractéristique de la zéolithe bêta. Les cristaux sont octaédriques et de taille voisine de 10 $\mu m$ (1 $\mu m$ = $10^{-6}$ mètre). Le rapport atomique Si/Al des cristaux est de 16.

EXEMPLE 2

Les conditions de synthèse sont identiques à celles de l'exemple 1 mis à part le fait que l'on remplace les cristaux de mordénite forme $H^+$ par des cristaux de zéolithe bêta, non décationisée, synthétisée en milieu classique basique.

Le spectre de diffraction des rayons X du produit obtenu est caractéristique de celui de la zéolithe bêta, les cristaux sont octaédriques et leur dimension est d'environ 1 $\mu m$.

EXEMPLE 3

Les conditions de synthèse sont identiques à celles de l'exemple 2, mis à part le fait que le rapport molaire entre le diazabicyclo-1,4 (2,2,2) octane (DABCO) et la méthylamine est de DABCO/CH$_3$NH$_2$ = 0,33.

Le spectre de diffraction des rayons X du produit obtenu est caractéristique de celui de la zéolithe bêta, les cristaux sont octaédriques et leur dimension est d'environ 1 µm.

EXEMPLE 4

1,4 g de diazabicyclo-1,4 (2,2,2) octane (DABCO) et 0,98 g de solution aqueuse à 40 % de méthylamine sont ajoutés à 0,92 g d'eau distillée. On additionne ensuite successivement et sous agitation 1,25 g de solution aqueuse à 40 % de HF (0,025 mole de HF), 0,88 g de silice Merck (0,0125 mole de silicium), 0,2 g de pseudo-boehmite (0,0025 mole d'aluminium) et environ 15 mg de cristaux de zéolithe bêta non décationisée.

Le mélange réactionnel a la composition molaire suivante :
Si/Al = 5 ; (R+R')/Si = 2 ; F⁻/Si = 2 ; H$_2$O/Si = 10 et R/R'= 1 (où R et R' désignent respectivement le DABCO et la méthylamine). Le pH du mélange réactionnel est de 8 environ.

Le mélange réactionnel est porté à 170°C pendant 15 jours. Le pH du mélange réactionnel est alors de 7 environ. Le produit recueilli après filtration et lavage présente un spectre de diffraction des rayons X caractéristique de la zéolithe bêta. Les cristaux sont octaédriques, leur taille est d'environ 1 µm.

EXEMPLE 5

A 177 g d'eau distillée, on ajoute successivement 33,7 g de diazabicyclo-1,4 (2,2,2) octane (DABCO) soit 0,3 mole, 23,3 g de solution aqueuse à 40 % de méthylamine (0,3 mole de CH$_3$NH$_2$) et 30 g de solution aqueuse à 40 % de HF soit 0,6 mole de HF. On ajoute ensuite successivement et sous agitation 42,3 g de silice Merck à 15 % d'eau soit 0,6 mole de silicium, 3,4 g de pseudo-boehmite à 24,6 % d'eau soit 0,05 mole d'aluminium et 0,7 g de cristaux de zéolithe bêta non décationisée.

Le mélange réactionnel présente la composition molaire suivante :
$$Si/Al = 12 ; (R/R')/Si = F/Si = 1 ; R/R' = 1 ; H_2O/Si = 20$$
(où R et R' désignent respectivement le DABCO et la méthylamine).

Le pH du milieu réactionnel est de 8,5 environ. Le mélange réactionnel est homogénéisé par agitation environ 30 minutes puis transféré dans un autoclave revêtu intérieurement de téflon. Le mélange réactionnel est alors porté à 170°C pendant 15 jours, le solide obtenu est séparé des eaux mères par filtration (le pH est proche de 8,5), lavé à l'eau distillée et séché 24 heures à 80°C environ (on obtient une masse d'environ 45 g de produit). Les cristaux sont octaédriques, d'une taille de 1 à 2 µm. Le spectre de diffraction des rayons X est caractéristique de la zéolithe bêta. Le rapport atomique Si/Al du solide est de 17,5, la teneur pondérale en fluor est de 0,65 %.

**Revendications**

1. Zéolithe cristalline synthétique de type bêta caractérisée par :
   a) la formule générale approchée suivante :
   $$M_{2/n}O, Al_2O_3, xSiO_2$$
   où
   M        représente un proton et/ou un cation métallique,
   n        est la valence de M,
   x        est un nombre compris entre 5 et 800,
   b) un diagramme de diffraction des rayons X représenté dans le tableau suivant :

EP 0 419 334 B1

| 2θ (°) | $d_{hkl}$ (Å) | I/Io |
|---|---|---|
| 7,60 | 11,60 | F |
| 17,30 | 5,12 | ff |
| 18,90 | 4,69 | ff |
| 21,10 | 4,21 | mF |
| 22,25 | 3,99 | FF |
| 25,15 | 3,53 | mf |
| 27,1 | 3,29 | mf |
| 28,5 | 3,129 | mf |
| 29,45 | 3,030 | mf |
| 33,05 | 2,707 | f |
| 34,55 | 2,594 | ff |
| 35,7 | 2,513 | ff |

c) une teneur en fluor comprise entre environ 0,005 et 2,0 % en poids, ladite zeolithe ayant été en outre synthétisée en milieu fluorure.

2. Zéolithe selon la revendication 1 caractérisée en ce que x est un nombre compris entre 7 et 350.

3. Zéolithe selon l'une des revendications 1 et 2 caractérisée en ce qu'elle possède une teneur en fluor comprise entre environ 0,01 et 1,5 % en poids.

4. Catalyseur renfermant une zéolithe selon l'une des revendications 1 à 3 et une matrice.

5. Catalyseur renfermant une zéolithe selon l'une des revendications 1 à 3, une matrice et au moins un métal ou/et composé de métal choisi parmi les groupes IA, VIB et VIII de la classification périodique des éléments.

6. Procédé de préparation d'une zéolithe selon l'une des revendications 1 à 3 caractérisé en ce que :
   a) on forme un mélange réactionnel en solution ayant un pH inférieur à environ 9 et comprenant de l'eau, au moins une source de silice, au moins une source d'aluminium, au moins une source d'agent mobilisateur contenant des ions fluorures, au moins une source d'au moins un agent structurant choisi dans le groupe formé par le diazabicyclo-1,4 (2,2,2) octane et un mélange de diazabicyclo-1,4 (2,2,2) octane et de méthylamine, ledit mélange réactionnel ayant une composition, en termes de rapport molaire, comprise dans les intervalles de valeurs suivants :
   Si/Al       : 3-200
   F⁻/Si       : 0,1-8
   $H_2O$/Si   : 4-30
   (R+R')/Si   : 0,5-4
   R/R'        : 0,1-infini
   où R est le diazabicyclo-1,4 (2,2,2) octane et R' la méthylamine,
   b) on maintient ledit mélange réactionnel à une température de chauffage comprise entre environ 50 et environ 250°C jusqu'à ce que l'on obtienne un composé cristallin, et
   c) on calcine ledit composé à une température supérieure à environ 350°C.

7. Procédé selon la revendication 6 dans lequel, dans l'étape a), ledit mélange réactionnel a une composition, en termes de rapport molaire, comprise dans les intervalles de valeurs suivants :
   Si/Al       : 3-100

8

F⁻/Si            : 0,2-6
$H_2O$/Si        : 5-20
(R+R')/Si        : 0,5-4
R/R'             : 0,2-infini
où R est le diazabicyclo-1,4 (2,2,2) octane et R' la méthylamine.

8.  Procédé selon l'une des revendications 6 et 7 dans lequel dans l'étape a), ledit mélange réactionnel a une composition, en termes de rapport molaire, comprise dans les intervalles de valeurs suivants :
    Si/Al         : 4-20
    F⁻/Si         : 0,5-4
    $H_2O$/Si     : 5-12
    (R+R')/Si     : 0,9-2,1
    R/R'          : 0,3-infini
    où R est le diazabicyclo-1,4 (2,2,2) octane et R' la méthylamine.

9.  Procédé selon l'une des revendications 6 à 8 dans lequel, dans l'étape a), ledit mélange réactionnel comprend en outre une source de cations alcalins et/ou alcalino-terreux.

10. Procédé selon l'une des revendications 6 à 9 dans lequel, dans l'étape b), on maintient ledit mélange réactionnel à une température de chauffage comprise entre environ 80 et 220°C jusqu'à ce que l'on obtienne un composé cristallin.


## Patentansprüche

1.  Kristalliner, synthetischer Zeolith vom Beta-Typ, gekennzeichnet durch:
    a) die folgende allgemeine angenäherte Formel:

    $$M_{2/n}O, Al_2O_3, x \ SiO_2,$$

    in der
    M          ein Proton und/oder ein Metallkation darstellt,
    n          die Wertigkeit von M ist,
    x          eine Zahl zwischen einschließlich 5 und 800 ist,
    b) ein Röntgendiffraktogramm, das in der folgenden Tabelle dargestellt ist:

| $2\theta$ (°) | $d_{hkl}$ (Å) | $I/I_0$ |
|---|---|---|
| 7,60 | 11,60 | F |
| 17,30 | 5,12 | ff |
| 18,90 | 4,69 | ff |
| 21,10 | 4,21 | mF |
| 22,25 | 3,99 | FF |
| 25,15 | 3,53 | mf |
| 27,1 | 3,29 | mf |
| 28,5 | 3,129 | mf |
| 29,45 | 3,030 | mf |
| 33,05 | 2,707 | f |
| 34,55 | 2,594 | ff |
| 35,7 | 2,513 | ff |

c) einen Fluorgehalt zwischen einschließlich 0,005 und 2,0 Gew.-%, wobei der besagte Zeolith darüber hinaus in einem fluorhaltigem Milieu synthetisiert wird.

2. Zeolith nach Anspruch 1, dadurch gekennzeichnet, daß x eine Zahl zwischen einschließlich 7 und 350 ist.

3. Zeolith nach einem der Ansprüche 1 und 2, dadurch gekennzeichnet, daß er einen Gehalt an Fluor zwischen einschließlich etwa 0,01 und 1,5 Gew.-% hat.

4. Katalysator, der einen Zeolith nach einem der Ansprüche 1 bis 3 und eine Matrix umfaßt.

5. Katalysator, der einen Zeolith nach einem der Ansprüche 1 bis 3, eine Matrix und mindestens ein Metall und/oder Metallverbindung, die aus den Gruppen IA, VIB und VIII des Periodensystems der Elemente gewählt wird, umfaßt.

6. Verfahren zur Herstellung eines Zeoliths nach einem der Ansprüche 1 bis 3, dadurch gekennzeichnet, daß:

a) ein Reaktionsmedium in Form einer Lösung mit einem pH-Wert unterhalb von ungefähr 9 hergestellt wird, das Wasser, mindestens eine Silikatquelle, mindestens eine Aluminiumquelle, mindestens eine Quelle eines Fluoridionen besitzenden Transportagens, mindestens eine Quelle für mindestens eine Templatsubstanz, die aus der von 1,4-Diazabicyclo[2,2,2]oktan und einem Gemisch von 1,4-Diazabicyclo[2,2,2]oktan und Methylamin gebildeten Gruppe gewählt wird, wobei die besagte Reaktionsmischung eine Zusammensetzung hat, die, angegeben in molaren Verhältnissen, in der Bereichen mit den folgenden Werten liegt:

Si/Al : 3-200,
F$^-$/Si : 0,1-8,
H$_2$O/Si : 4-30,
(R+R')/Si : 0,5-4,
R/R' : 0,1-unendlich,

wobei R 1,4-Diazabicyclo[2,2,2]oktan und R' Methylamin darstellt,

b) die besagte Reaktionsmischung auf einer Temperatur zwischen einschließlich ungefähr gleich 50 und 250 C, gehalten wird, bis man eine kristalline Verbindung erhält, und

c) die besagte Verbindung bei einer Temperatur von über ungefähr 350 C kalziniert wird.

7. Verfahren nach Anspruch 6, bei dem beim Schritt a) die besagte Reaktionsmischung eine Zusammensetzung hat, die, angegeben in molaren Verhältnissen, in der Bereichen mit den folgenden Werten liegt:

Si/Al : 3-100,
F$^-$/Si : 0,2-6,
H$_2$O/Si : 2-20,
(R+R')/Si : 0,54,
R/R' : 0,2- unendlich,

wobei R 1,4-Diazabicyclo[2,2,2]oktan und R' Methylamin darstellt.

8. Verfahren nach einem der Ansprüche 6 und 7, bei dem beim Schritt a) die besagte Reaktionsmischung eine Zusammensetzung hat, die, angegeben in molaren Verhältnissen, in der Bereichen mit den folgenden Werten liegt:

Si/Al : 4-20,
F$^-$/Si : 0,5-4,
H$_2$O/Si : 5-12,
(R+R')/Si : 0,9-2,1,
R/R' : 0,3- unendlich,

wobei R 1,4-Diazabicyclo[2,2,2]oktan und R' Methylamin darstellt.

9. Verfahren nach einem der Ansprüche 6 bis 8, bei dem beim Schritt a) die besagte Reaktionsmischung darüber hinaus eine Quelle für Alkali- oder Erdalkali-Kationen umfaßt.

10. Verfahren nach einem der Ansprüche 6 bis 9, bei dem beim Schritt b) die besagte Reaktionsmischung auf einer Temperatur zwischen einschließlich etwa 80 und 220 C gehalten wird, bis eine kristalline Verbindung erhalten wird.

**Claims**

1. A synthetic crystalline zeolite of the beta type characterized by :

    a) the following approximate general formula :

    $$Mz/nO, AlzO3, xSiOz$$

    Where

    M represents a proton and/or a metallic cation,

    n is the valence of M,

    x i a number ranging from 5 to 800,

    b) an X-ray diffraction diagram shown in the following table :

| 2 (°) | dnkl (A) | I/Io |
|---|---|---|
| 7.60 | 11.60 | F |
| 17.30 | 5.12 | ff |
| 18.90 | 4.69 | ff |
| 21.10 | 4.21 | mf |
| 22.25 | 3.99 | FF |
| 25.15 | 3.53 | mf |
| 27.1 | 3.29 | mf |
| 28.5 | 3.129 | mf |
| 29.45 | 3.030 | mf |
| 33.05 | 2.707 | f |
| 34.55 | 2.594 | ff |
| 35.7 | 2.513 | ff |

    c) a fluorine content ranging from about 0.005 to 2.0% by weight, said zeolite having besides been synthetized in a fluoride medium.

2. A zeolite according to claim 1 cheracterized in that x is a number ranging from 7 to 350.

3. A zeolite according to any one of claims 1 and 2 characterized in that it has a fluorine content ranging from about 0.01 to 1.5% by weight.

4. A catalyst comprising a zeolite according to any one of claims 1 to 3 and a matrix.

5. A catalyst comprising a zeolite according to any one of claims 1 to 3, a matrix and at least one metal or/and metal compound selected from groups IA, VIB and VIII of the periodic table of elements.

6. A process for preparing a zeolite according to any one of claims 1 to 3 comprising :

    a) forming a dissolved reaction mixture with a pH value lower than about 9 and comprising water, at least one silica source, at least one aluminum source, at least one source of a mobilizing agent containing fluoride ions, at least one source of at least one structuring agent selected from the group consisting of 1,4 (2,2,2)-diazabicyclo octane and a mixture of 1,4 (2,2,2)-diazabicyclo octane and methylamine, said reaction mixture having a composition, expressed in molar ratio, ranging between the following values :

    Si/Al : 3-200

    F⁻/Si : 0.1-8

    $H_2O$/Si : 4-30

    (R+R')/Si : 0.5-4

    R/R' : 0.1-infinity

    where R is the 1,4 (2,2,2)-diazabicyclo octane and R' the methylamine,

    b) maintaining said reaction mixture at a heating temperature ranging from about 50 to about 250°C until a crystalline compound is obtained, and

    c) calcining said compound at a temperature higher than about 350°C.

7. A process according to claim 6 wherein, in stage a), said reaction mixture has a composition, expressed in molar ratio, ranging between the following values :

Si/Al : 3-100
$F^-$/Si : 0.2-6
$H_2O$/Si : 5-20
(R+R')/Si : 0.5-4
R/R' : 0.2-infinity

where R is the 1,4 (2,2,2)-diazabicyclo octane and R' the methylamine.

8. A process according to any one of claims 6 and 7 wherein, in stage a), said reaction mixture has a composition, expressed in molar ratio, ranging between the following values :

Si/Al : 4-20
$F^-$/Si : 0.5-4
$H_2O$/Si : 5-12
(R+R')/Si : 0.9-2.1
R/R' : 0.3-infinity

where R is the 1,4 (2,2,2)-diazabicyclo octane and R' the methylamine.

9. A process according to any one of claims 6 to 8 wherein, in stage a), said reaction mixture also comprises a source of alkaline and/or alkaline-earth cations.

10. A process according to any one of claims 6 to 9 wherein, in stage b), said reaction mixture is maintained at a heating temperature ranging from about 80 to 220°C until a crystalline compound is obtained.